# EUROPEAN PATENT APPLICATION

(11) **EP 2 463 811 A1**
(43) Date of publication of application: **13.06.2012**
(21) Application number: 11153105.9
(22) Date of filing: 02.02.2011
(51) Int. Cl.: G06Q 10/00

(54) **Portable electronic device capable of adjusting prompting time and operating method thereof**

(30) Priority: 19.11.2010 TW 099139980
(71) Applicant: Hannspree, Inc., Taipei (TW)
(72) Inventor: Tsai, Mei-Ching, Taipei City 110, Xinyi Dist. (TW)
(74) Representative: Tranter, Andrew David

(57) **Abstract**

A portable electronic device capable of adjusting prompting time includes a processing unit including a time unit and a time setting unit, a positioning unit, an input unit, and a network unit. The positioning unit is provided for positioning position of the portable electronic device. The input unit is provided for inputting a schedule information including a predetermined prompting time and a position of destination. The network unit is connected with a network server through Internet for downloading transportation and/or weather information and transmitting the same to the processing unit so as to adjust, in response thereto, the predetermined prompting time. A method for operating the portable electronic device capable of adjusting prompting time is also disclosed.

## Description

### BACKGROUND OF THE INVENTION

### 1. Field of the Invention

The present invention relates to a portable electronic device, and more particularly, to a portable electronic device capable of adjusting prompting time and operating method thereof.

### 2. Description of Related Art

In the present busy daily life, alarm clock is a quite common tool for time prompting. Other electronic devices, such as radio, computer, mobile phone, and personal digital assistant (PDA), all provide a function of time prompting like an alarm clock.

In general, an electronic device with a time prompting function can be set for such function in a process as follows: a user presets a prompting time, and when time reaches to what the user presets as the prompting time, the electronic device with a time prompting function will sound so as to remind the user that the preset time has come.

However, such electronic device can only remind the user based on the preset prompting time, and in case of sudden occasions, the electronic device would not be able to perform a prompting-time adjustment in response thereto. For example, the user may adjust working time or school time in accordance with a normal occasion. But the commuting time for the user may be increased subject to weather condition, traffic condition of traveling routes, or traveling condition of public transportations, such as raining or traffic accidents. Since the electronic device, according to the conventional art, can only remind the user based on the preset time, prompting time cannot be adjusted automatically in response to the possible sudden occasions as mentioned above.

Therefore, the issue to be addressed by the present invention is to provide an innovative electronic device capable of adjusting prompting time, so that the aforesaid problems will be surely solved.

### SUMMARY OF THE INVENTION

An object of the present invention is to provide a portable electronic device capable of adjusting prompting time so as to determine whether a predetermined prompting time is to be adjusted in accordance with information from weather and/or traffic information websites.

To achieve the above-mentioned object, the portable electronic device, according to the present invention, comprises a processing unit, a positioning unit, an input unit, and a network unit. The processing unit includes a time unit and a time setting unit, wherein the time unit is provided for calculating time, while the time setting unit for setting a predetermined prompting time. The positioning unit is electrically connected with the processing unit for positioning position of the portable electronic device. The input unit is electrically connected with the processing unit for inputting a schedule information including at least one predetermined prompting time and at least one position of destination. The network unit is electrically connected with the processing unit, and is connected with Internet through a wired or wireless measure. The network unit is connected with at least one network server through Internet for downloading transportation and weather information and transmitting the same to the processing unit so as to adjust, in response thereto, the at least one predetermined prompting time.

The portable electronic device, according to the present invention, further comprises an output unit, an audio unit, a display unit, a storage unit, and a battery unit. The output unit is electrically connected with the processing unit for outputting an output signal. The audio unit is electrically connected with the output unit for receiving, correspondingly, the output signal of the output unit and converting the output signal into an audio signal. The display unit is electrically connected with the output signal for receiving, correspondingly, the output signal and converts the same into a display signal. The storage unit is electrically connected with the processing unit for storing a plurality of audio files and the schedule information. The battery unit is electrically connected with the processing unit for supplying electrical power to the portable electronic device.

Preferably, the display unit includes a touch screen, the input unit including solid keys, and the positioning unit including a global positioning system (GPS) or an auxiliary global positioning system. Further, the network server may relate to the Weather Bureau website, the Transportation Department website, or an instant public transport dynamic information website.

In addition, the portable electronic device, according to the present invention, may further comprise a detecting device, which is electrically connected with the portable electronic device through a wireless measure, for providing weather information of the position of the portable electronic device.

Another object of the present invention is to provide an operating method of the portable electronic device capable of adjusting prompting time so as to determine whether the predetermined prompting time should be adjusted based on weather or transportation information.

To achieve the above-mentioned object, the operating method, according to the present invention, comprises the following steps: (A) a user sets the at least one predetermined prompting time and the at least one position of destination; (B) the network unit is, through Internet, connected with at least one network server so as to download a transportation information or a weather information and transmit the transportation information or the weather information to the processing unit; (C) the processing unit, in accordance with transportation information, weather information, or weather information detected by the detecting device, determines whether the predetermined prompting time should be adjusted, if affirmative, step (D) be performed, if negative, then step (E) be performed; (D) the processing unit drives, in accordance with the adjusted predetermined prompting time, the output unit to control the audio unit to sound, and/or control the display unit to display a prompting information; and (E) the processing unit drives, in accordance with the predetermined prompting time, the output unit to control the audio unit to sound, and/or control the display unit to display a prompting information.

Given from up above, it is understood that through the portable electronic device capable of adjusting prompting time and operating method thereof, according to the present invention, the processing unit can interpret, automatically, information provided from Weather Bureau website, Transportation Department website, or instant public transport dynamic information website, and determine whether the predetermined prompting time should be adjusted.

Other objects, advantages, and novel features of the present invention will become more apparent from the following detailed descriptions when taken in conjunction with the accompanying drawings.

### BRIEF DESCRIPTION OF THE DRAWINGS

FIG. 1 is a block diagram illustrating a systematic structure of the present invention;
FIG. 2 is a flowchart illustrating operation of the present invention; and
FIG. 3 is a schematic view illustrating operation of the present invention.

### DETAILED DESCRIPTION OF THE PREFERRED EMBODIMENTS

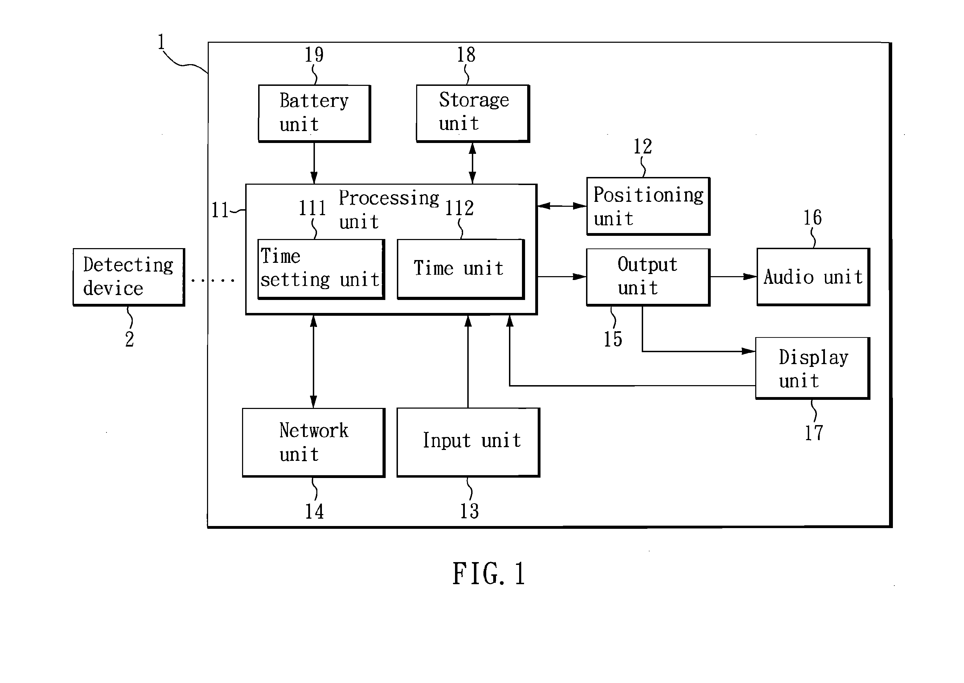

Referring to FIG. 1, a block diagram illustrating a systematic structure of the present invention, a portable electronic device 1 capable of adjusting prompting time comprises a processing unit 11, a positioning unit 12, an input unit 13, a network unit 14, an output unit 15, an audio unit 16, a display unit 17, a storage unit 18, and a battery unit 19. Preferably, the portable electronic device 1 includes a mobile phone, a personal digital assistant, or an electronic alarm clock.

As shown in FIG. 1, the portable electronic device 1, according to the present invention, is to be used together with a detecting device 2, where the detecting device 2 is electrically connected with the portable electronic device 1 through a wireless measure. The detecting device 2 detects the weather condition of where the portable electronic device 1 is located, and transmits the information of the weather condition to the processing unit 11. Preferably, the detecting device 2 is installed outdoor so as to measure the weather condition accurately. The processing unit 11 includes a time setting unit 111 and a time unit 112, wherein the time setting unit 111 is provided for setting a predetermined prompting time and the time unit 112 for calculating time.

The processing unit 11 is electrically connected with the positioning unit 12, the input unit 13, the network unit 14, the output unit 15, the storage unit 18, and the battery unit 19. The output unit 15 is electrically connected with the audio unit 16 and the display unit 17. The positioning unit 12 is provided for positioning location of the portable electronic device 1. Preferably, the positioning unit 12 relates to a global positioning system (GPS) device or an auxiliary global positioning system. The input unit 13, preferably, is solid keys for inputting schedule information, wherein the schedule information includes predetermined prompting time and position of destination. The network unit 14 is connected with Internet through a wireless transmission measure such as Wi-Fi, 3G, or WiMAX, or through a wired transmission measure such as ADSL or optical fiber. The output unit 15 outputs an output signal to the audio unit 16 and the display unit 17. As such, the audio unit 16 receives, correspondingly, output signals from the output unit 15, and converts them into audio signals, and then plays the same. Likewise, the display unit 17 receives output signals from the output unit 15, and converts them into display signals, and then plays the same. Preferably, the display unit 17 is a touch screen. Further, the storage unit 18 is provided for storing a plurality of audio files, which can be played by the audio unit 16, and the schedule information. The battery unit 19 is provided for supplying electric power to the portable electronic device 1.

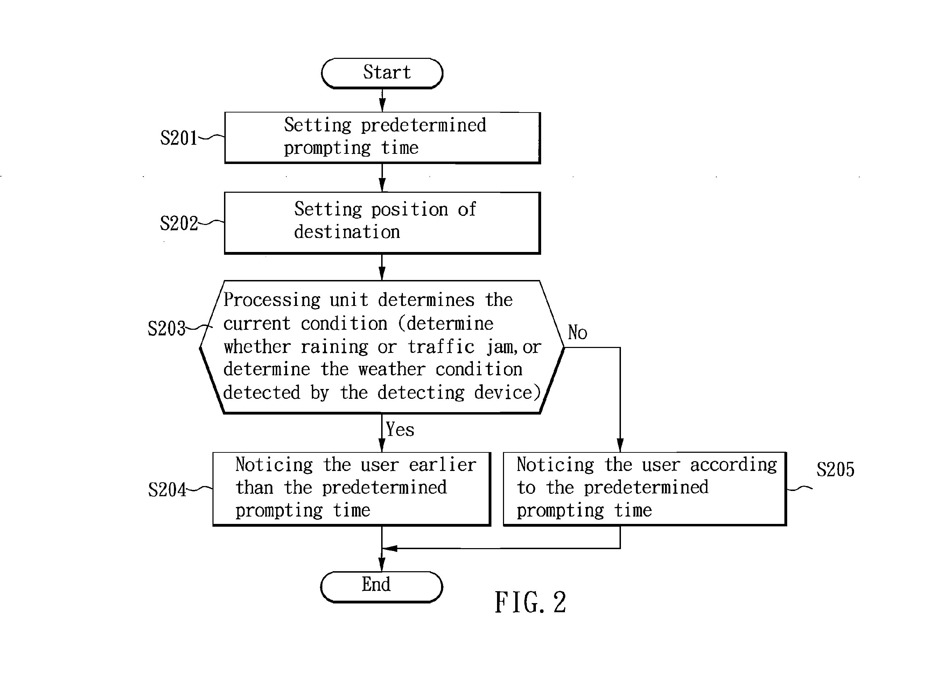

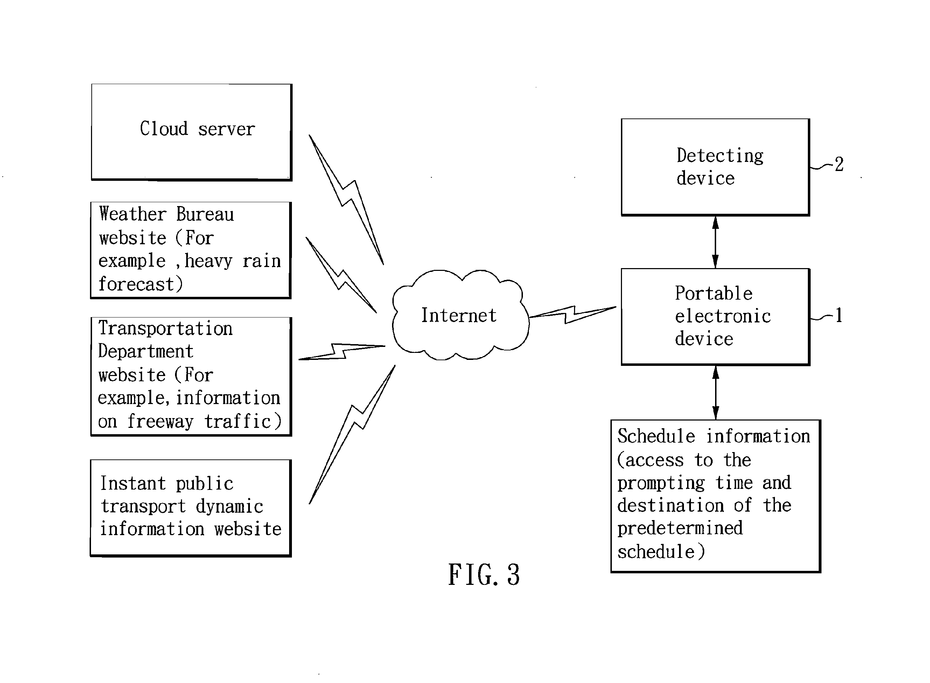

Now referring to FIG. 2, a flowchart illustrating operation of the portable electronic device capable of adjusting prompting time according to the present invention, the flowchart is discussed as follows: First, a user, through the input unit 13, sets a predetermined prompting time (step S201) and a position of destination (step S202). For example, the user, at Taipei on November 10, 2010, is bound for Kaohsiung on the morning of November 11, 2010. Then the user can set the predetermined prompting time as "Morning 8:00, November 11, 2010," with the position of destination as "Kaohsiung." Of course, in case the schedule information such as the predetermined prompting time and the position of destination has been stored in the storage unit 18 of the portable electronic device 1, the processing unit 11 of the portable electronic device 1 can find out the predetermined prompting time and/or the position of destination automatically based on the schedule information already stored, for example, a calendar of the portable electronic device 1. However, explanation should be given that the schedule information such as the predetermined prompting time and the position of destination can be downloaded, synchronously, from the network unit 14 and a cloud server, as shown in FIGs. 1 and 3, wherein the cloud server may, for example, relate to Google Calendar or Yahoo Calendar.

Further referring to FIG. 3, a schematic view illustrating operation of the present invention, and also to FIG. 2, the network unit 14 is connected, through Internet, to Weather Bureau website, Transportation Department website, and/or instant public transport dynamic information website such that transport or weather information can be downloaded. It should be noted that the websites also include those can provide any transportation or weather information. Besides, the detecting device 2 can provide the processing unit 11 about weather information of the location of the portable electronic device 1 so as to determine the current condition including whether raining or traffic jam (step S203). The traffic or weather information downloaded from the network unit 14, in connection with a network server through Internet, is transmitted to the processing unit 11 prior to the predetermined prompting time. Thereafter, the processing unit 11 determines whether the predetermined prompting time set in the original schedule information should be adjusted (step S204). For example, the Weather Bureau website announces that "A heavy rain takes place at a certain area during the travel between Taipei and Kaohsiung on November 11, 2010," or the Transportation Department website announces that "A traffic jam takes place at a certain freeway section during the travel from Taipei to Kaohsiung on November 11, 2010." The processing unit 11 can interpret automatically such information and, in response thereto, adjust the predetermined prompting time, such as noticing the user one or two hours earlier, so that the user can have more time in respond to sudden weather or traffic occasions. Further explanation may be given that the processing unit 11 can calculate automatically the required earlier prompting time, based on the information announced by the Transportation Department about the riding speed at various sections of the freeway between Taipei and Kaohsiung. For example, suppose the distance between Taipei and Kaohsiung is about 350 km, and the total traveling time is about 3.5 hours under a 100 km/hr riding at a normal traffic condition. Nevertheless, in case there is a traffic jam between Taipei and Hsinchu (about 100 km) and that the riding speed is about 50 km/hr, and the total traveling time is about 4.5 hours. Then the processing unit 11 will interpret such information automatically and, in response thereto, adjust the prompting time one hour earlier.

As another embodiment, the earlier prompting time can also be set by the user through the input unit 13 so as to store the earlier prompting time in the time setting unit 111 of the processing unit 11. For example, in case the user does not have any extra schedule but only takes a bus commuting from his/her house to office, then the processing unit 11 sets the office as a destination. In the meantime, the processing unit 11 downloads and interprets information about departure time of the bus to be taken, through the network unit 14, at the instant public transport dynamic information website. When the processing unit 11 determines a bus delay, it will, in response thereto, adjust the predetermined prompting time and notice the user earlier, based on the earlier prompting time set by the user.

Suppose the detecting device 2, the Weather Bureau website, the Transportation Department website, or the instant public transport dynamic information website does not announce abnormal weather or transportation information, the processing unit 11 will remind the user in accordance with the predetermined prompting time (step S205). As such, the processing unit 11 will, in accordance with the predetermined prompting time (i.e. morning 8:00, November 11, 2010), drive the output unit 15 to control the audio unit 16 to sound, and/or the display unit 17 to display a prompting information to the user.

Although the present invention has been explained in relation to its preferred embodiments, it is to be understood that many other possible modifications and variations can be made without departing from the scope of the invention as hereinafter claimed.

## Claims

1. A portable electronic device capable of adjusting prompting time, comprising:
a processing unit, including a time unit and a time setting unit, wherein the time unit is provided for calculating time, while the time setting unit for setting a predetermined prompting time;
a positioning unit, being electrically connected with the processing unit for positioning position of the portable electronic device;
an input unit, being electrically connected with the processing unit for inputting a schedule information including at least one predetermined prompting time and at least one position of destination; and
a network unit, being electrically connected with the processing unit, and being connected with Internet through a wired or wireless measure;
whereby, the network unit is connected with at least one network server through Internet for downloading transportation and weather information and transmitting the transportation and weather information to the processing unit so as to adjust, in response to the transportation and weather information, the at least one predetermined prompting time.

2. The portable electronic device capable of adjusting prompting time as claimed in claim 1, wherein the portable electronic device includes a mobile phone, a personal digital assistant, or an electronic alarm clock.

3. The portable electronic device capable of adjusting prompting time as claimed in claim 1, further comprising an output unit electrically connected with the processing unit for outputting an output signal.

4. The portable electronic device capable of adjusting prompting time as claimed in claim 3, further comprising an audio unit electrically connected with the output unit for receiving, correspondingly, the output signal of the output unit and converting the same into an audio signal.

5. The portable electronic device capable of adjusting prompting time as claimed in claim 3, further comprising a display unit electrically connected with the output unit for receiving, correspondingly, the output signal of the output unit and converting the same into a display signal.

6. The portable electronic device capable of adjusting prompting time as claimed in claim 5, wherein the display unit is a touch screen.

7. The portable electronic device capable of adjusting prompting time as claimed in claim 1, wherein the input unit includes solid keys.

8. The portable electronic device capable of adjusting prompting time as claimed in claim 7, further comprising an output unit electrically connected with the processing unit for outputting an output signal.

9. The portable electronic device capable of adjusting prompting time as claimed in claim 8, further comprising a display unit electrically connected with the output unit for receiving, correspondingly, the output signal of the output unit and converting the output signal into a display signal.

10. The portable electronic device capable of adjusting prompting time as claimed in claim 8, further comprising an audio unit electrically connected with the output unit for receiving, correspondingly, the output signal of the output unit and converting the output signal into an audio signal.

11. The portable electronic device capable of adjusting prompting time as claimed in claim 1, further comprising a storage unit electrically connected with the processing unit for storing a plurality of audio files and the schedule information.

12. The portable electronic device capable of adjusting prompting time as claimed in claim 1, wherein the positioning unit is a global positioning system (GPS) or an auxiliary global positioning system.

13. The portable electronic device capable of adjusting prompting time as claimed in claim 1, wherein the network server relates to a Weather Bureau website, a Transportation Department website, or an instant public transport dynamic information website.

14. The portable electronic device capable of adjusting prompting time as claimed in claim 1, further comprising a battery unit electrically connected with the processing unit.

15. The portable electronic device capable of adjusting prompting time as claimed in claim 1, further comprising a detecting device electrically connected with the portable electronic device through a wireless measure.

16. A method for operating the portable electronic device capable of adjusting prompting time, wherein the portable electronic device comprises a processing unit including a time unit and a time setting unit, a positioning unit, an input unit, an output unit, an audio unit, a display unit, a storage unit, and a network unit, and wherein the processing unit is electrically connected with the positioning unit, the input unit, the output unit, the storage unit, and the network unit, and wherein the output unit is electrically connected with the audio unit and the display unit, and the input unit is provided for inputting a schedule information including at least one predetermined prompting time and at least one position of destination, the method comprising:
(A) a user sets the at least one predetermined prompting time and the at least one position of destination;
(B) the network unit is, through Internet, connected with at least one network server so as to download a transportation information or a weather information and transmit the same to the processing unit;
(C) the processing unit, in accordance with transportation information, weather information, or weather information detected by a detecting device, determines whether the predetermined prompting time should be adjusted, if affirmative, step (D) be performed, if negative, then step (E) be performed;
(D) the processing unit drives, in accordance with the adjusted predetermined prompting time, the output unit to control the audio unit to sound, and/or control the display unit to display a prompting information; and
(E) the processing unit drives, in accordance with the predetermined prompting time, the output unit to control the audio unit to sound, and/or control the display unit to display a prompting information.
